# EUROPEAN PATENT SPECIFICATION

(11) **EP 0 680 114 B1**
(45) Date of publication and mention of the grant of the patent: **02.02.2000**
(21) Application number: 95201025.4
(22) Date of filing: 21.04.1995
(51) Int. Cl.: H01R 9/26, H02B 1/052

(54) **A modular electric apparatus with rail hook-up device**
Modularen elektrischen Apparat mit Vorrichtung zum Festklammern an eine Schiene
Appareil électrique modulaire à dispositif d'accrochage sur rail

(30) Priority: 27.04.1994 IT MI940808
(43) Date of publication of application: 02.11.1995
(73) Proprietor: BTICINO S.P.A., 20154 Milano (IT)
(72) Inventor: Pianezzola, Sergio, I-21100 Calcinate del Pesce (IT)
(74) Representative: Perani, Aurelio

(56) References cited:
- DE-U- 1 991 014
- FR-A- 2 304 245
- FR-A- 2 388 154
- GB-A- 1 108 820

## Description

The present invention relates to a modular electric apparatus with rail hook-up device.

Known are modular electric apparatus intended for side-by-side mutually juxtaposed installation on a holding rail of metal which extends along the direction ofjuxtaposition.

For the purpose, the apparatus are provided on a rear face with a rail housing recess formed between a fixed tooth for hanging the apparatus and a movable tooth for hanging a hook-up device juxtaposed to the fixed tooth.

The hook-up device consists of a movable slider in a seat formed in the apparatus. The slider is terminated with a hook-up tooth opposite the fixed tooth.

The slider is held by a spring to a working position where the slider hook-up tooth lies next to the apparatus fixed tooth, ensuring the apparatus hook-up to a rail (usually of a standard type or a DIN rail).

In order to minimize the cost of the hook-up device, a requisite with this type of apparatus, widely employed both for household and industrial applications, the slider is made of a plastics material.

The apparatus hanging to the rail takes place, with these devices, by engaging an edge of the rail in the retaining groove formed by the fixed tooth and exerting an appropriate pressure on the apparatus to push it against the rail.

In this way, the movable tooth of the slider, formed with a lead-in ramp, interferes with the other rail edge and by overcoming the spring bias moves away from the fixed tooth allowing the rail to be fitted between both teeth.

After the rail edge has moved past the end of the lead-in ramp and is no longer interfering with the tooth, the slider is returned elastically back to a rest position and ensures the rail hook-up between both teeth.

Removal of the apparatus from the rail takes place by applying, to one slider end accessible by the operator, a force which, overcoming the spring action and moving the slider away, disengages the rail from the slider tooth.

This type of embodiment, although a simple and economical one, has serious limitations.

Hooking to the rail takes place by pressure from the apparatus on the rail with the rail edge slipping on the lead-in ramp and the tooth interfering.

Since the metal rail is usually formed from sheet metal by blanking and bending, with no finishing operations that would increase its cost, the sharp edge of the rail exerts a high frictional resistance and severe abrasive action on the tooth ramp, making the hook-up operation troublesome and wearing the tooth after few removal and insertion cycles, such as may be required for ordinary system modifications.

An even more serious fact is the tripping of the rail edge on the plastics material, with the slider jamming up and hindering the insertion and requiring that a large force be applied to the body of the apparatus, with possible slider or tooth breakage.

In the worn condition, the tooth can no longer ensure reliable hooking of the apparatus, and what is even more serious, by allowing a degree of free movement of the apparatus, it impairs stability of the electric connections which may degrade to produce local overheating, and in the extreme, circuit breaks.

In addition, the apparatus removal involves continued application of a force to the slider using a tool of some kind throughout the time taken by the release operation, which makes the operation a specially troublesome and difficult one.

The apparatus assembly is also made difficult by that the slider must be inserted into its seat during the assembling process together with other constituent elements of the apparatus and the insertion operation cannot be performed after the assembly is completed. To solve at least the tooth wear problem, it has been proposed of using a metal strengthener attached to its sliding faces or incorporated to the tooth, as an insert, in the course of the molding operations or as described in FR-A-2 304 245, forming state of the art according to the preamble of claim 1, as a separate piece . However, there still remain the other limitations pointed out, and the device cost is increased.

All of the limitations mentioned are obviated by the hook-up and modular electric apparatus device according to the present invention comprising a slider with a hook-up tooth with a surface protected by an elastic metal element suitably bent to form a straddler which, by embracing the tooth, prevents it from wearing out by friction on the rail, thereby making the hooking-up operation even easier.

The straddler, in turn, is made wear-resistant by the use of a suitably hard material such as steel.

The straddler configuration of the element and a housing provided in the slider ensure an easy stable connection of the snap action type of the element to the slider, and therefore a quick and economical assembly procedure. Further and specifically, the metal element is formed from elastic strip and wire, preferably spring steel, so that it can replace the slider bias spring and function to bias the slider to a hooked position.

For the purpose, the straddler portion enclosed by the housing or cavity is extended into a second portion or tab allowed to deform elastically which interferes with an abutment elevation affixed to the apparatus and imposes a rest position on the slider corresponding to the hooked position of the tooth, the latter acting as a cantilever support for the free termination of the elastic element or tab.

According to a further aspect of the present invention, by suitably shaping the free end of the tab, the slider is ensured the ability to take, additionally to an elastically biased hooked position, also a stable open position which allows easy removal of the apparatus from the holding rail.

According to further aspects of the present invention, the slider is provided with holding teeth which allow the slider to be inserted into its seat with the apparatus in the assembled condition, ensure its unloseability and define the slider travel in its seat. According to a further aspect of the present invention the elastic element interferes with the abutment elevation with the interposition of an elastic arm fast with the slider.

The features and advantages of the invention will become more clearly apparent from the following description of a preferred embodiment and the accompanying drawings, in which:
Figure 1 is an exploded perspective view of a preferred embodiment of a modular electric apparatus with rail hook-up device according to the invention;
Figure 2 is a mid-section view, taken along A-A in Figure 1, showing the mutual arrangement of two elements, the slider and protection element, of the hook-up device in Figure 1;
Figure 3 is a mid-section view, taken along A-A in Figure 1, of the modular electric apparatus in Figure 1 shown in the hooked-up position with respect to a holding rail;
Figure 4 shows the electric apparatus of Figure 1 in the hooked-up position;
Figure 5 shows the electric apparatus of Figure 1 with the hook-up device in the open position;
Figure 6 is a sectional view, taken along B-B in Figure 7, of a first alternative embodiment of the hook-up device;
Figure 7 is a sectional view, taken along C-C in Figure 6, of the embodiment shown in Figure 6;
Figure 8 is an exploded perspective view of a second embodiment of the hook-up device according to the invention;
Figure 9 is a perspective view of a third embodiment of the hook-up device according to the invention;
Figure 10 is a perspective view of an elastic element formed from wire for the device in Figure 9;
Figure 11 is a perspective view of a fourth embodiment of the hook-up device according to the invention.

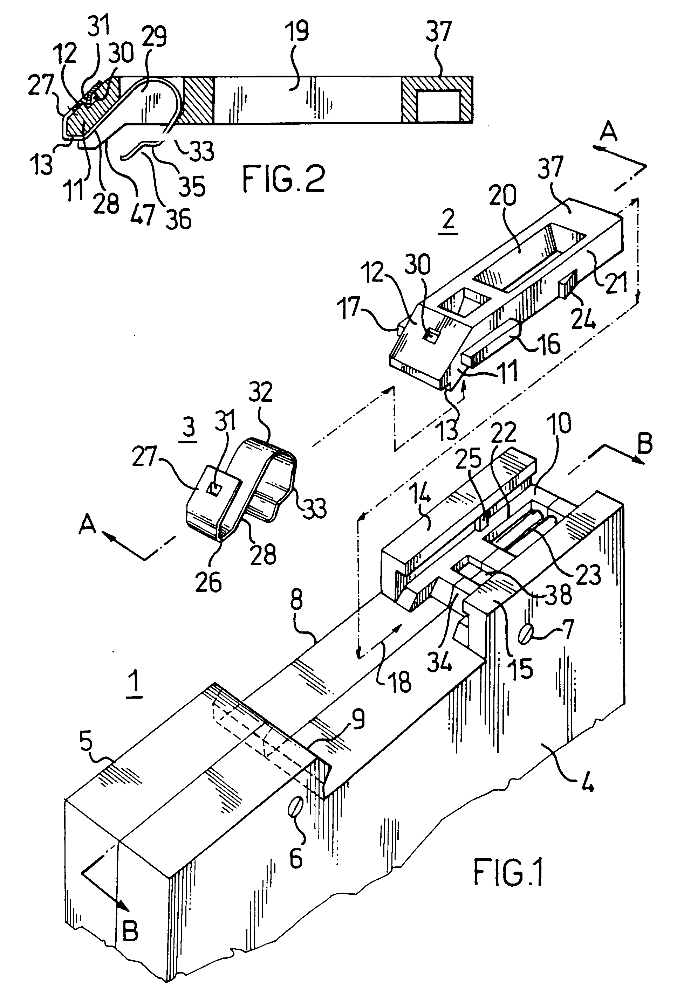

With reference to Figures 1 and 2, a modular electric apparatus 1 according to the invention comprises an insulating body in the general form of a right parallelepipedon consisting of two shells 4, 5 coupled together by means of fastening members such as screws 6, 7 and housing electric devices not shown.

The upper face of the body constitutes an apparatus back intended for juxtaposition to a holding rail not shown, and is provided with a rail housing recess 8 confined between a fixed hook-up tooth 9 and an opposite hook-up device.

The hook-up device is formed essentially by a slider 2 in the general form of an elongate parallelepipedon, housed slidably along the direction of greater length in a corresponding grooved seat 10 formed between the two shells 4, 5.

The slider 2 is terminated with a hook-up tooth 11, sawtooth shaped with a lead-in ramp for interference (or simply interference ramp) 12, and a holding face 13.

The grooved seat 10 is provided with two parallel holding webs 14, 15 which by co-operating with two parallel tenons 16, 17 on the slider secure the slider 2 in the seat 10 with one degree of freedom only which allows the slider to slide in the seat.

The insertion of the slider 2 into the seat 10 can be effected, on completion of the assembling of the electric devices in the two shells, along the direction of an arrow 18.

The slider 2 is suitably formed by molding from a plastics material which allows for the element to be conformed at low cost according to the required demands and, from the electric standpoint, because of its insulating characteristics is no source of risks of undesired electric contacts.

In modular electric apparatus intended to be juxtaposed to one another on one side, the free surface for the electric interconnections and the accomodation of control (such as handles and pushbuttons) and indicator members is so limited that heavy restrictions are imposed on the arrangement, shape, size, electric properties of auxiliary members such as the slider 2.

Advantageously, the slider 2 which occupies a significant portion of the apparatus back, is not solid, but rather has an elongate slit 19 confined between two splayed posts 20, 21 extending between the two ends of the slider.

The slit allows access from outside to an underlying opening 22 in the apparatus, in which a base 23 (e.g. two opposite jaws) is housed for electric connection to a contact pin or blade which, from the outside, through the slit 19 and the guide from the splayed posts 20, 21, fits into the base.

The use of an electrically insulative plastics material in the making of the slider 2 ensures protection against improper and incidental contacts with the underlying base 23.

At the same time, an outer contact pin or blade is guided accurately toward the underlying base.

Advantageously, the two splayed posts 20, 21 are (each, or at least one of them) provided on their outer face with a sawtooth shaped holding tooth 24 aligned in the direction of movement of the slider to one of the tenons, 16 or 17.

The sliding seat 10 for the slider 2 is in turn provided, at the guide slots formed by the webs 14 and 15, with two holding teeth or elevations of which one, 25, is shown in Figure 1.

As the slider is inserted into its seat by moving it in the direction of the arrow 18, the teeth such as 24 interfere with the teeth such as 25 and produce an elastic deformation of the posts 20, 21 which enables the teeth 24 to move over and past the elevations 25.

Thereafter, the posts 20, 21 recover their undeformed positions.

With the slider in this position, the elevations 25 intervene between tenons 16, 17 and teeth such as 24, thereby making the slider 2 impossible to lose with respect to the apparatus, and at the same time allowing a predetermined travel for the slider 2 which is set by the distance separating the tenons and the teeth such as 24 and by the reach of the elevations 25.

A metal element or tab 3 bent to an S-shape and formed from strip steel stock, for example, forms, with a portion thereof, a straddler or saddle 26 which fits over the tooth 11, with one side 27 in contact with the interference ramp 12 of the tooth 11, and the other side 28 received in a suitable housing 29 formed on the slide 2 rearwardly of the tooth 11.

The straddler 26 protects the ramp 12 and the holding face 13 of the tooth 11 from wear.

Although not strictly required, a recess 30 is provided in the ramp 12 to receive a small holding tooth 31 blanked out of the side 27 of the straddler.

The tooth 31, being a snap fit into the recess 30, ensures that the straddler cannot be lost with respect to the slider.

As shown in Figures 1 and 2, the tab 3 extends past the straddler 26 to form a second half-wave 32, opposite the straddler 26 and partway received in the housing 29.

The free end 33 of the half-wave 32 comes out of the housing 29, and with the slider properly inserted into its seat, interferes with an abutment elevation 34 formed on the bottom of the seat 10.

As a result of this interference, the half-wave 32 becomes compressed and biased elastically to apply a thrust to the slider tending to pull it out and position it to a hooked position.

The slider is prevented from coming out of the seat by the tooth 24 interfering with a tooth such as 25, which also provides an adequately biased condition for the spring tab 3.

The interference of a rail with the tooth 11, and specifically the straddler 26, by overcoming the thrust from the tab, shifts the slider between a hooked position and an unstable release position, going through all the intermediate positions.

According to a further aspect of the present invention, the free end 33 of the tab is suitably bent into a full wave with a peak 35 followed by a trough 36 pointing to the elevation 34.

The slider 2 is provided with a projecting head 37 from the housing 10 to enable a force to be exerted on the slider which, by overcoming the thrust from the elastic tab, brings the peak 35 past the elevation 34 and stably into a recess 38 formed in the bottom of the seat 10.

In this position, the elevation 34 is received in the trough 36 and the tooth 11 is fully retracted into the seat 10, thereby facilitating removal of the apparatus 1 from a holding rail.

This stable position of the tooth 11, and hence of the slider 2, is referred to as the open position.

A thrust applied to the head of the slider in the opposite direction allows one to return the slider to its working or hooked position.

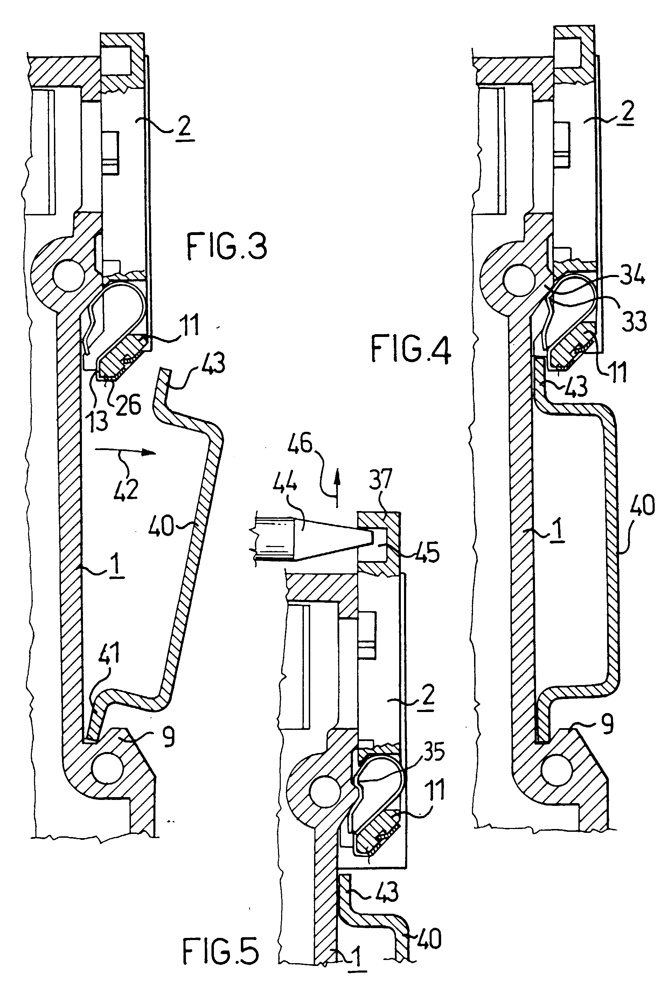

Figures 3, 4, 5 illustrate sequentially how the apparatus 1 is hooked or unhooked to/from a rail.

For clarity reasons, the apparatus 1 is shown in section, and partly so is also the slider 2.

The apparatus 1 is juxtaposed to a holding rail 40 such that a raised track 41 of the rail engages with the fixed tooth 9, whereafter, by a slight turn of the apparatus 1 around the track 41 in the direction of an arrow 42, the movable hook-up tooth 11 of the slider 2 is pushed against the raised rail track 43 parallel to the track 41.

The interference between the tooth 11, as protected by the straddler 26, urges the tooth 11 inwardly of the slider seat to a released position, thereby allowing the track 43 to move over and past the head of the tooth.

In this condition the free end 33 of the elastic tab 3, biased by interference with the elevation 34, returns the tooth 11 (and the slider 2) to the hooked position, toward the fixed tooth 9, ensuring stable snug hook-up of the apparatus 1 to the rail 40.

This stable condition is depicted in Figure 4.

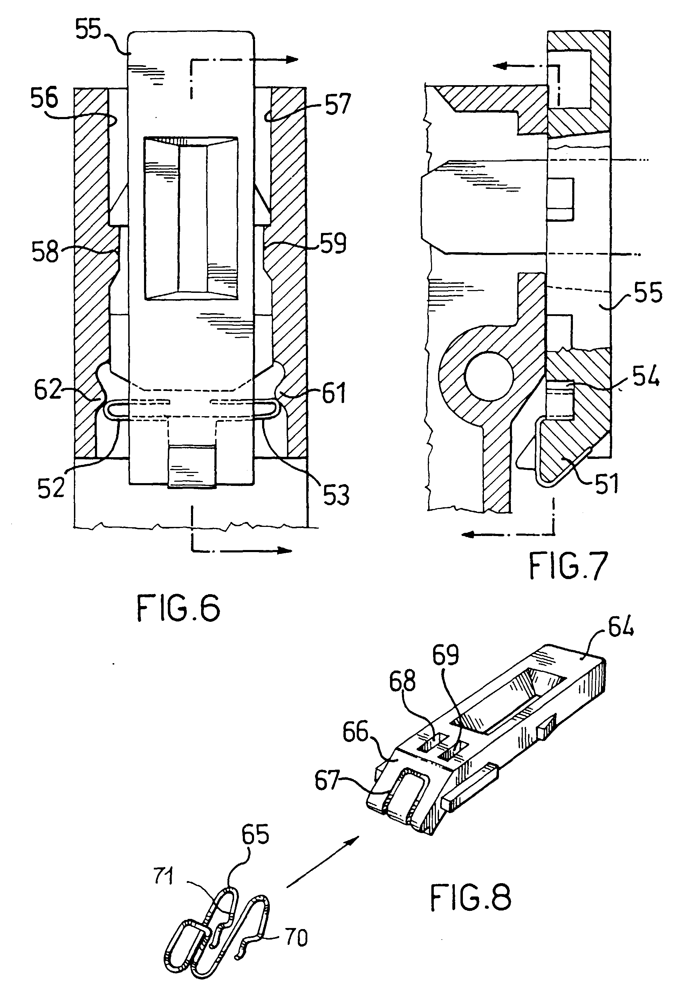

To remove the apparatus from the rail, as shown in Figure 5, it will suffice that one acts, using a suitable tool such as a screwdriver 44, on the projecting head 37 of the slider 2, purposely provided with a suitable recess or eyelet 45 so as to pull the slider 2 outwards from its seat in the direction of an arrow 46.

As a result of the force applied, the peak 35 of the spring tab 3 moves over and past the elevation 34 and fits stably into the recess 38 as shown in Figure 5.

This position is retained even after the action of the tool 44 (which can be removed) ceases and ensures easy removability of the apparatus.

As previously mentioned, a pressure on the head 37 will then suffice to return the slider 2 and tooth 11 to the working position.

As brought out by Figurs 3, 4, 5, for any positions that the slider may take, once properly inserted into its seat, the free end 33 of the elastic tab prevents the slider 26 from coming off the tooth 11 by interfering with either the elevation 34 or the bottom of the rail housing 8.

Thus, the function of the tooth 31 and the corresponding recess 30 is merely an ancillary one, to ensure that the tab 3 cannot get lost with respect to the slider 2 even when the slider is not inserted into its seat.

To ensure a stable positioning of the tab in the width direction of the tooth 11, the slider and tooth have, in a perpendicular direction and to the length of the slider, a width which exceeds somewhat the width of the tab, so that the housing 29 may be formed as a recess contained between two panels which are suitably extended to the holding face 13 of the tooth 11. One of these panels, denoted by the numeral 47, is shown best in Figure 2.

The hook-up device described above meets, therefore, a plurality of requirements:
it prevents wear of the hook-up tooth, ensuring improved relative slidability of the tooth and the rail;
it enables a mechanically stable, biased hook-up with no backlash to be provided;
it enables a stable opened position to be provided for easier removal;
it acts as an insulating protection and a lead-in for an electric connection pin;
it makes the components unlosable.

All this is accomplished with a uniquely simple and economical construction.

It should be understood that the foregoing description only covers a preferred embodiment and that many modifications may be made thereunto.

In particular, to permit an electric apparatus to be installed on a rail without involving rotation, however slight, about its edge, by a single movement along a predetermined direction dictated, for example, by the need to insert pins or blades into the bases such as 23 in Figure 1, a slider hook-up device identical with the one described may be substituted for the fixed tooth 9.

Further, it is not necessary that the tab 3 be formed from strip metal, and it may be blanked off thin sheet metal or even be shaped from wire.

For instance, as shown in Figures 6 and 7, the elastic tab forming the straddler protection 50 for the tooth 51 may spread out into two elastic arms 52, 53 suitably bent to a U-shape and extending outside a slider 55 housing 54 to interfere with the bottom of the guide grooves 56, 57 formed in the apparatus for guiding the slider 55.

The profile of the bottom of the guide grooves 56, 57 is suitably shaped to form unlosable holding means 58, 59 for the slide and abutment elevations 61, 62 for the elastic arms, with fully equivalent functions to those of the teeth 25 and the elevation 34 in Figure 1.

Figure 8 is an exploded perspective view showing a slider 64 and a metal element 65 formed from wire, preferably spring wire.

The wire is bent into a "U", and further bent to form a pair of parallel side-by-side S-shapes which duplicate the curvature of the element 3 in Figure 1.

The slider 64, similar to the slider of Figure 1, is provided, on the interference surface 66, with a U-shaped groove 67 which ensures proper mutual positioning of the slider tooth and the double straddler formed by the metal element 65. Downwardly of the hook-up tooth, the double straddler is received in a housing, or preferably two housings as partly shown and denoted by the numerals 68, 69, in quite the same way as the tab 3 in Figure 1.

The element 65 is provided with a pair of free elastic terminations 70, 71 which form a second element portion allowed to deform elastically and capable of interacting with an elevation (such as 34 in Figure 1) present in the slider seat.

The operation of the slider 64, with the element 65, is therefore the same as that of the slider 2 previously described.

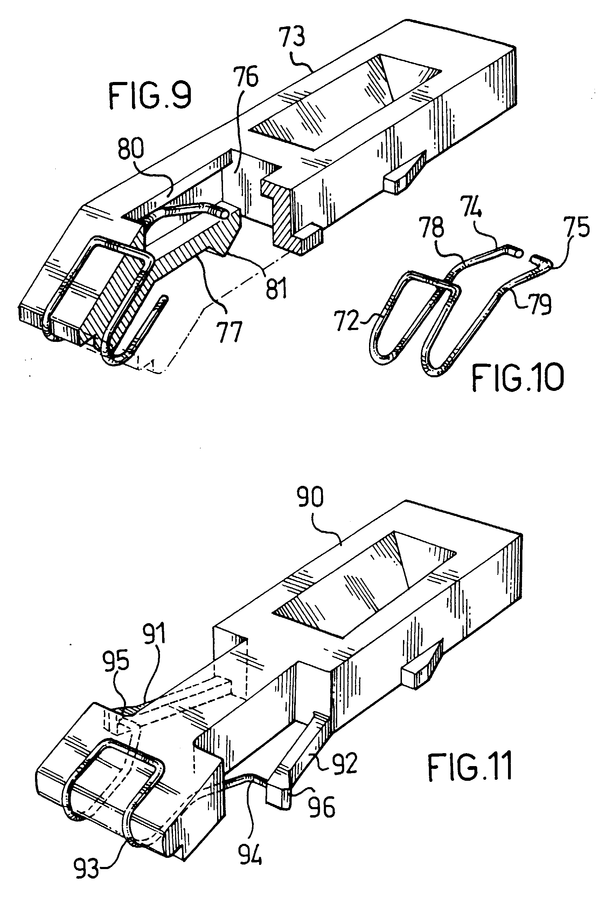

Figure 9 is a part-sectional perspective view showing a slider/metal element combination which is the functional equivalent of those previously described wherein the free terminations of the metal straddler do not interact directly with the abutment elevation formed in the slider seat, but rather through an interposed resilient arm formed on the slider.

Figure 10 is a perspective view of the metal element 72 employed in the slider 73 of Figure 9.

The element 72, formed from spring wire, is bent to a U-shape and then into a pair of side-by-side straddlers.

The free terminations 74, 75 of the element 72 are bent toward each other, and once inserted into a housing 76 of the slider 73, rest on a jutting arm 77 formed on the slider internally of the housing 76.

Two knees 78, 79 of the double straddler 72 bear against two slider holding webs of which one, 80, is shown in Figure 9.

The elastic element 72 tends, therefore, to push the end of the arm 77, provided with a tooth 81, downwards.

The interference of the tooth 81 with an abutment elevation present in the slider seat ensures the previously described functionalities.

With this embodiment, the loads from the interference of the tooth 81 with the elevation in the seat, in the sliding direction of the slider, are fully taken up by the arm 77 and directly transferred to the slider.

The free terminations of the elastic element 72 are, therefore, loaded in a perpendicular direction to the sliding direction of the slider, and any forces tending to dislodge the elastic element 72 from its housing are excluded.

Quite similar is the embodiment of Figure 11, which only departs from that of Figures 9 and 10 by that the slider 90 is provided with two resilient arms 91, 92.

The free ends of the elastic element 93 (of which one, 94, is shown) are in this case open opposite each other and by bearing against the ends of the arms 91 and 92, tend to spread them apart.

The ends of the arms 91 and 92 are each provided with a tooth 95, 96.

These teeth interfere with corresponding elevations in the slider seat which are quite similar to the elevations 60, 61 of Figure 6.

## Claims

1. A modular electric apparatus (1) with a rail hook-up device (2,3) comprising a slider (2) of a plastics material in the general form of an elongate parallelepipedon running longitudinally and housed in a corresponding seat (10) of the modular apparatus (1) to take a hooked position and a released position, said slider (2) being terminated with a rail hook-up tooth (11) having an interference ramp (12) opposite a holding face (13), said device further (2, 3) comprising an elastic metal element (3) bent into a straddler, said straddler embracing said hook-up tooth (11) and overlapping said interference ramp (12) and said opposite holding face (13) so as to prevent wear of said tooth due to friction on said rail, said slider (2) being provided with a cavity (29) for housing a first portion (32) of said element (3), characterized in that a second portion (33) of said element (3) extends from said cavity (29) to form elastic bias means for said slider (2) in the hooked position.

2. An electric apparatus as in Claim 1, wherein said second portion (33) pushes, with the slider in said predetermined hooked position, against an abutment elevation (34) in said seat, the interference of said second portion (33) with said abutment elevation biasing said slider (2) elastically to the hooked position.

3. An apparatus as in Claim 2, wherein said metal element (3) is formed from strip metal and said second free portion forms a tab (33,35,36) having the shape of a full wave with a peak (35) and a trough (36) pointing to said abutment elevation (34), said peak (35) interfering with said abutment elevation (34) at positions of said slider included between said hooked position and a released position, said trough (36) housing said abutment elevation (34) and ensuring a stable open position for said slider with said slider run past said released position.

4. An apparatus as in Claim 1, wherein said metal element is formed from wire bent to form a double straddler embracing said hook-up tooth and provided with a pair of elastic free terminations (70,71), said elastic bias means for said slider in the hooked position comprising said pair of elastic free terminations (70,71).

5. An apparatus as in Claim 4, wherein said elastic free ends are shaped as a full wave with a peak and a trough pointing to an abutment elevation in said seat, said peak interfering with said abutment elevation at positions of said slider included between said hooked position and a released position, said trough housing said abutment elevation and ensuring a stable open position for said slider with said slider run past said released position.

6. An apparatus as in Claim 1, wherein said metal element is formed from wire bent to form a double straddler embracing said hook-up tooth and provided with a pair of elastic free terminations (78,79),
said slider comprises at least one resilient arm (77) terminated with a bias tooth (81) for biasing said slider to a hooked position, said pair of elastic free terminations (78,79) acting on said arm (77) to impose a loaded condition on it, and
said slider seat comprises at least one abutment elevation (34), said slider biasing tooth (81) interfering with said abutment elevation (34) at positions of the slider included between said hooked position and a released position, said bias tooth moving past said abutment elevation and ensuring a stable open position for said slider with said slider run past said released position.

7. An apparatus as in Claim 6, wherein said slider comprises a pair of opposite resilient arms (91,92), each terminated with a slider biasing tooth (95,96), each of said elastic terminations (94) acting on one of the arms (91,92) in said pair to impose a loaded condition on it, and said slider seat includes a pair of abutment elevations (61,62), said bias tooth (95,96) on each of said arms (91,92) interfering with one of said abutment elevations at positions of said slider included between said hooked position and said released position, said bias tooth moving past said abutment elevations and ensuring a stable open position for said slider with said slider run past said released position.

8. An apparatus as in either Claim 1 or 2 or 3 or 4 or 6 or 7, wherein said slider includes an elongate slit (20) in the direction of greater length.

9. An apparatus as in Claim 8, wherein said slider includes at least one holding tooth (24) co-operating with holding means (25) in said seat to prevent removal of said slider from said seat and define the travel distance of said slider in said seat.

10. An apparatus as in the preceding claims, comprising a pair of said sliders (2) and a pair of said seats (10), aligned along said direction of greater length, said hook-up tooth (11) of one slider in the pair being opposite to the hook-up tooth (11) of the other slider in the pair.

## Patentansprüche

1. Eine modulare elektrische Anordnung (1) mit einer Schieneneinhakvorrichtung (2, 3), die ein Gleitstück (2) aus einem Kunststoffmaterial in der allgemeinen Form eines länglichen Parallelepipeds aufweist, das in Längsrichtung läuft und in einem entsprechenden Sitz (10) der modularen Anordnung (1) untergebracht ist, um eine eingehakte Stellung und eine gelöste Stellung einzunehmen, wobei das Gleitstück (2) in einem Schieneneinhakzahn (11), der eine Eingriffsrampe (12) gegenüber einer Halteseite (13) aufweist, endet, wobei die Vorrichtung (2, 3) ferner ein elastisches Metallelement (3), das zu einer Spreizeinrichtung gebogen ist, aufweist, wobei die Spreizeinrichtung den Einhakzahn (11) umgibt und die Eingriffsrampe (12) und die gegenüberliegende Halteseite (13) überlappt, um einen Verschleiß des Zahns aufgrund von Reibung auf der Schiene zu verhindern, wobei das Gleitstück (2) mit einem Hohlraum (29) zum Unterbringen eines ersten Abschnitts (32) des Elements (3) versehen ist, dadurch gekennzeichnet, daß sich ein zweiter Abschnitt (33) des Elements (3) von dem Hohlraum (29) erstreckt, um eine elastische Vorspanneinrichtung für das Gleitstück (2) in der eingehakten Stellung zu bilden.

2. Eine elektrische Anordnung gemäß Anspruch 1, bei der der zweite Abschnitt (33) gegen eine Widerlagererhöhung (34) in dem Sitz drückt, wenn sich das Gleitstück in der vorbestimmten eingehakten Stellung befindet, wobei der Eingriff des zweiten Abschnitts (33) mit der Widerlagererhöhung das Gleitstück (2) elastisch in die eingehakte Stellung vorspannt.

3. Eine Anordnung gemäß Anspruch 2, bei der das Metallelement (3) aus einem Metallband gebildet ist und der zweite freie Abschnitt einen Streifen (33, 35, 36) bildet, der die Form einer vollständigen Welle mit einer Spitze (35) und einer Wanne (36) aufweist, die auf die Widerlagererhöhung (34) zeigt, wobei die Spitze (35) an Stellungen des Gleitstücks zwischen der eingehakten Stellung und einer gelösten Stellung mit der Widerlagererhöhung (34) zusammenstößt, wobei die Wanne (36) die Widerlagererhöhung (34) unterbringt und eine stabile offene Stellung für das Gleitstück sicherstellt, wenn das Gleitstück an der gelösten Position vorbeiläuft.

4. Eine Anordnung gemäß Anspruch 4, bei der das Metallelement aus einem Draht gebildet ist, der gebogen ist, um eine doppelte Spreizeinrichtung zu bilden, die den Einhakzahn umgibt, und mit einem Paar von elastischen freien Endabschnitten (70, 71) versehen ist, wobei die elastische Vorspanneinrichtung für das Gleitstück in der eingehakten Stellung das Paar von elastischen freien Endabschnitten (70, 71) aufweist.

5. Eine Anordnung gemäß Anspruch 4, bei der die elastischen freien Enden die Form einer vollständigen Welle mit einer Spitze und einer Wanne aufweisen, die auf eine Widerlagererhöhung in dem Sitz zeigt, wobei die Spitze an Stellungen des Gleitstücks zwischen der eingehakten Stellung und einer gelösten Stellung mit der Widerlagererhöhung zusammenstößt, wobei die Wanne die Widerlagererhöhung unterbringt und eine stabile offene Stellung für das Gleitstück sicherstellt, wenn das Gleitstück an der gelösten Stellung vorbeiläuft.

6. Eine Anordnung gemäß Anspruch 1, bei der das Metallelement aus einem Draht gebildet ist, der gebogen ist, um eine doppelte Spreizeinrichtung zu bilden, die den Einhakzahn umgibt, und mit einem Paar von elastischen freien Endabschnitten (78, 79) versehen ist,
wobei das Gleitstück zumindest einen elastischen Arm (77) aufweist, der in einem Vorspannzahn (81) zum Vorspannen des Gleitstücks in eine eingehakte Stellung endet, wobei das Paar von elastischen freien Endabschnitten (78, 79) auf den Arm (77) wirkt, um an demselben einen belasteten Zustand vorzusehen, und
wobei der Gleitstücksitz zumindest eine Widerlagererhöhung (34) aufweist, wobei der Gleitstückvorspannungszahn (81) an Stellungen des Gleitstücks zwischen der eingehakten Stellung und einer gelösten Stellung mit der Widerlagererhöhung (34) zusammenstößt, wobei sich der Vorspannzahn an der Widerlagererhöhung vorbei bewegt und eine stabile offene Stellung für das Gleitstück sicherstellt, wenn das Gleitstück an der gelösten Stellung vorbeiläuft.

7. Eine Anordnung gemäß Anspruch 6, bei der das Gleitstück ein Paar von gegenüberliegenden elastischen Armen (91, 92) aufweist, von denen jeder in einem Gleitstückvorspannungszahn (95, 96) endet, wobei jeder der elastischen Endabschnitte (94) auf einen der Arme (91, 92) in dem Paar wirkt, um einen belasteten Zustand an demselben vorzusehen, und wobei der Gleitstücksitz ein Paar von Widerlagererhöhungen (61, 62) aufweist, wobei der Vorspannungzahn (95, 96) auf jedem der Arme (91, 92) an Stellungen des Gleitstücks zwischen der eingehakten Stellung und der gelösten Stellung mit einer der Widerlagererhöhungen zusammenstößt, wobei sich der Vorspannzahn an den Widerlagererhöhungen vorbei bewegt und eine stabile offene Stellung für das Gleitstück sicherstellt, wenn das Gleitstück an der gelösten Stellung vorbeiläuft.

8. Eine Anordnung gemäß einem der Ansprüche 1, 2, 3, 4, 6 oder 7, bei der das Gleitstück in der Richtung der größeren Länge einen länglichen Schlitz (20) aufweist.

9. Eine Anordnung gemäß Anspruch 8, bei der das Gleitstück zumindest einen Haltezahn (24) aufweist, der mit der Halteeinrichtung (25) in dem Sitz zusammenwirkt, um ein Entfernen des Gleitstücks aus dem Sitz zu verhindern und um die Wegstrecke des Gleitstücks in dem Sitz zu definieren.

10. Eine Anordnung gemäß einem der vorhergehenden Ansprüche, die ein Paar der Gleitstücke (2) und ein Paar der Sitze (10) aufweist, die entlang der Richtunhg der größeren Länge ausgerichtet sind, wobei der Einhakzahn (11) eines Gleitstücks des Paars zu dem Einhakzahn (11) des anderen Gleitstücks des Paars gegenüberliegt.

## Revendications

1. Appareil électrique modulaire (1) à dispositif d'accrochage sur rail (2, 3) comportant une coulisse (2) en matière plastique généralement en forme de parallélépipède allongé s'étendant longitudinalement et reçue dans un siège correspondant (10) de l'appareil modulaire (1) pour prendre une position d'accrochage et une position dégagée, ladite coulisse (2) se terminant par une dent d'accrochage sur rail (11) présentant une rampe de serrage (12) opposée à une face de maintien (13), ledit dispositif (2, 3) comportant en outre un élément métallique élastique (3) courbé en forme de selle, ladite selle entourant ladite dent d'accrochage (11) et recouvrant ladite rampe de serrage (12) et ladite face de maintien opposée (13) de manière à empêcher une usure de ladite dent par suite d'une friction sur ledit rail, ladite coulisse (2) étant munie d'une cavité (29) pour recevoir une première partie (32) dudit élément (3), caractérisé en ce qu'une seconde partie (33) dudit élément (3) s'étend depuis ladite cavité (29) pour former un moyen de sollicitation élastique pour ladite coulisse (2) dans la position d'accrochage.

2. Appareil électrique selon la revendication 1, dans lequel ladite seconde partie (33) pousse, avec la coulisse dans ladite position d'accrochage prédéterminée, sur une butée surélevée (34) dans ledit siège, le serrage de ladite seconde partie (33) avec ladite butée surélevée sollicitant élastiquement ladite coulisse (2) dans la position d'accrochage.

3. Appareil selon la revendication 2, dans lequel ledit élément métallique (3) est formé d'une bande métallique et ladite seconde partie libre forme une patte (33, 35, 36) ayant la forme de deux alternances avec une crête (35) et un creux (36) tournés vers ladite butée surélevée (34), ladite crête (35) coopérant avec ladite butée surélevée (34) en des positions de ladite coulisse comprises entre ladite position d'accrochage et une position dégagée, ledit creux (36) recevant ladite butée surélevée (34) et assurant une position ouverte stable pour ladite coulisse lorsque celle-ci est déplacée au-delà de ladite position dégagée.

4. Appareil selon la revendication 1, dans lequel ledit élément métallique est constitué d'un fil courbé pour former une selle double entourant ladite dent d'accrochage et muni d'une paire de terminaisons libres élastiques (70, 71), ledit moyen de sollicitation élastique pour ladite coulisse dans la position d'accrochage comprenant ladite paire de terminaisons libres élastiques (70, 71).

5. Appareil selon la revendication 4, dans lequel lesdites extrémités libres élastiques forment deux alternances avec une crête et un creux tournés vers une butée surélevée dans ledit siège, ladite crête coopérant avec ladite butée surélevée en des positions de ladite coulisse comprises entre ladite position d'accrochage et une position dégagée, ledit creux recevant ladite butée surélevée et assurant une position ouverte stable pour ladite coulisse lorsque celle-ci est déplacée au-delà de ladite position dégagée.

6. Appareil selon la revendication 1, dans lequel ledit élément métallique est constitué d'un fil courbé pour former une selle double entourant ladite dent d'accrochage et muni d'une paire de terminaisons libres élastiques (78, 79),
ladite coulisse comprend au moins un bras élastique (77) terminé par une dent de sollicitation (81) afin de solliciter ladite coulisse dans une position d'accrochage, ladite paire de terminaisons libres élastiques (78, 79) agissant sur ledit bras (77) pour imposer une condition de charge sur celui-ci, et
ledit siège de coulisse comprend au moins une butée surélevée (34), ladite dent (81) de sollicitation de la coulisse coopérant avec ladite butée surélevée (34) en des positions de la coulisse comprises entre ladite position d'accrochage et une position dégagée, ladite dent de sollicitation se déplaçant devant ladite butée surélevée et assurant une position ouverte stable pour ladite coulisse lorsque celle-ci est déplacée au-delà de ladite position dégagée.

7. Appareil selon la revendication 6, dans lequel ladite coulisse comprend une paire de bras élastiques opposés (91, 92) se terminant chacun par une dent (95, 96) de sollicitation de la coulisse, chacune desdites terminaisons élastiques (94) agissant sur l'un des bras (91 92) de ladite paire pour imposer une condition de charge sur celui-ci et ledit siège de coulisse comprend une paire de butées surélevées (61, 62), ladite dent de sollicitation (95, 96) sur chacun desdits bras (91, 92) coopérant avec l'une desdites butées surélevées en des positions de ladite coulisse comprises entre ladite position d'accrochage et ladite position dégagée, ladite dent de sollicitation se déplaçant devant lesdites butées surélevées et assurant une position ouverte stable pour ladite coulisse lorsque celle-ci est déplacée au-delà de ladite position dégagée.

8. Appareil selon l'une quelconque des revendications 1, 2, 3, 4, 6 ou 7, dans lequel ladite coulisse comprend une fente allongée (20) dans le sens de la plus grande longueur.

9. Appareil selon la revendication 8, dans lequel ladite coulisse comprend au moins une dent de maintien (24) coopérant avec un moyen de maintien (25) dans ledit siège pour empêcher un retrait de ladite coulisse dudit siège et définir la distance de déplacement de ladite coulisse dans ledit siège.

10. Appareil selon l'une quelconque des revendications précédentes, comprenant une paire desdites coulisses (2) et une paire desdits sièges (10), alignés selon ladite direction de plus grande longueur, ladite dent d'accrochage (11) d'une coulisse de la paire étant opposée à la dent d'accrochage (11) de l'autre coulisse de la paire.
